# EUROPÄISCHE PATENTANMELDUNG

(11) **EP 3 453 935 A1**
(43) Veröffentlichungstag der Anmeldung: **13.03.2019**
(21) Anmeldenummer: 18191810.3
(22) Anmeldetag: 30.08.2018
(51) Int. Cl.: F16L 23/028, F16L 23/18

(54) **ROHRVERBINDUNGSSYSTEM**

(30) Priorität: 07.09.2017 DE 102017120604
(71) Anmelder: Düker GmbH, 97753 Karlstadt (DE)
(72) Erfinder: Jäger, Oliver, 89520 Heidenheim (DE)
(74) Vertreter: Hoeger, Stellrecht & Partner Patentanwälte mbB

(57) **Zusammenfassung**

Um ein Rohrverbindungssystem zum Verbinden eines Bauteils mit einem Spitzende mit einem einen Verbindungsflansch aufweisenden Bauteil, umfassend ein Dichtungselement, und einem ringförmigen, auf das Dichtungselement einwirkenden Druckkörper, derart zu verbessern, dass eine möglichst in allen Einbausituationen dichte Verbindung zwischen dem Spitzende und dem Verbindungsflansch geschaffen werden kann, wird vorgeschlagen, dass das Dichtungselement einen das Spitzende aufnehmenden und umfangseitig umschließenden hülsenförmigen ersten Dichtungsabschnitt und einen mit dem hülsenförmigen ersten Dichtungsabschnitt verbundenen und sich ausgehend von dem hülsenförmigen ersten Dichtabschnitt radial über diesen hinaus erstreckenden flanschähnlichen zweiten Dichtungsabschnitt zur Anlage an einer Flanschdichtfläche des Verbindungsflansches aufweist und dass der ringförmiger Druckkörper mit dem Verbindungsflansch mit Verspanneinheiten verbindbar und dadurch in Richtung des Verbindungsflansches beaufschlagbar ist, um aufgrund der Beaufschlagung in Richtung des Verbindungsflansches einerseits den hülsenförmigen ersten Dichtungsabschnitt radial in Richtung des Spitzendes zu verpressen und andererseits den flanschartigen zweiten Dichtungsabschnitt axial in Richtung der Flanschdichtfläche des Verbindungsflansches zu beaufschlagen.

## Beschreibung

Die Erfindung betrifft ein Rohrverbindungssystem zum Verbinden eines Bauteils mit einem Spitzende mit einem einen Verbindungsflansch aufweisenden Bauteil, umfassend ein Dichtungselement und einen ringförmigen auf das Dichtungselement einwirkenden Druckkörper.

Bei derartigen Rohrverbindungssystemen besteht die Aufgabe, eine möglichst in allen Einbausituationen dichte Verbindung zwischen dem Spitzende und dem Verbindungsflansch zu schaffen.

Diese Aufgabe wird bei einem Rohrverbindungssystem der eingangs beschriebenen Art erfindungsgemäß dadurch gelöst, dass das Dichtungselement einen das Spitzende aufnehmenden und umfangsseitig umschließenden hülsenförmigen ersten Dichtungsabschnitt und einen mit dem hülsenförmigen ersten Dichtungsabschnitt verbundenen, sich ausgehend von dem hülsenförmigen ersten Dichtungsabschnitt radial über diesen hinaus erstreckenden flanschähnlichen zweiten Dichtungsabschnitt zur Anlage an einer Flanschdichtfläche des Verbindungsflansches aufweist und dass der ringförmige Druckkörper mit dem Verbindungsflansch mit Verspanneinheiten verbindbar ist und dadurch in Richtung des Verbindungsflansches beaufschlagbar ist, um aufgrund der Beaufschlagung in Richtung des Verbindungsflansches einerseits den hülsenförmigen ersten Dichtungsabschnitt radialen Richtung des Spitzendes zu verpressen und andererseits den flanschartigen zweiten Dichtungsabschnitt axial in Richtung der Flanschdichtfläche zu beaufschlagen.

Der Vorteil der erfindungsgemäßen Lösung ist darin zu sehen, dass diese eine optimale Möglichkeit schafft, einerseits eine ausreichend große Dichtpressung zwischen dem ersten Dichtungsabschnitt und dem Spitzende und andererseits eine ausreichend große und stabile Dichtpressung zwischen dem flanschähnlichen Dichtungsabschnitt und dem der Flanschdichtfläche des Verbindungsflansches zu erzielen.

Besonders vorteilhaft ist es dabei, wenn der hülsenförmige erste Dichtungsabschnitt auf seiner dem Spitzende zugewandten Seite eine Dichtstruktur mit mindestens einen geschlossen umlaufenden, in Richtung einer Umfangsfläche des Spitzendes im Querschnitt vorgewölbten Dichtwulst aufweist.

Noch besser ist es, wenn die Dichtstruktur des hülsenförmigen ersten Dichtungsabschnitts mehrere, in axialer Richtung des Spitzendes aufeinanderfolgend angeordnete und in Richtung der Umfangsfläche des Spitzendes vorgewölbte Dichtwulste aufweist.

Mindestens ein derartiger Dichtwulst oder mehrere derartige Dichtwulste schaffen die Möglichkeit, lokal eine hohe Flächenpressung im Bereich der Umfangsfläche des Spitzendes zu erreichen und somit die Abdichtung zwischen dem Spitzende und dem ersten Dichtungsabschnitt signifikant zu verbessern.

Darüber hinaus ist vorgesehen, dass der hülsenförmige erste Dichtungsabschnitt auf seiner dem ringförmigen Druckkörper zugewandten Seite eine Druckstruktur mit mindestens einen geschlossen umlaufenden und in Richtung des ringförmigen Druckkörpers im Querschnitt vorgewölbten Wulst aufweist.

Ein derartiger Wulst funktioniert insbesondere als Tragwulst und schafft eine lokal höhere Elastizität des ersten Dichtungsabschnitts und erleichtert somit den Zusammenbau des Dichtungselements mit dem ringförmigen Druckkörper.

Noch besser ist es, wenn die Druckstruktur des hülsenförmigen ersten Dichtungsabschnitts mehrere in axialer Richtung des Spitzendes aufeinanderfolgend angeordnete und in Richtung des ringförmigen Druckkörpers vorgewölbte Wulste aufweist, so dass durch die mehreren Wulste mehrere Stellen mit verstärkter Elastizität geschaffen sind, die das Aufschieben des ringförmigen Druckkörpers auf den hülsenförmigen ersten Dichtungsabschnitt erleichtern.

Ferner ist vorzugsweise vorgesehen, dass der flanschartige zweite Dichtungsabschnitt sich radial nach außen über den hülsenförmigen ersten Dichtungsabschnitt hinaus erstreckt.

Besonders günstig ist es, wenn der flanschartige zweite Dichtungsabschnitt ausgehend von dem hülsenförmigen ersten Dichtungsabschnitt eine radiale Erstreckung aufweist, die größer ist als ein 0,7-faches einer radialen Ausdehnung des hülsenförmigen ersten Dichtungsabschnitts, noch besser größer als die radiale Ausdehnung des hülsenförmigen ersten Dichtungsabschnitts.

Eine besonders vorteilhafte Ausführung sieht vor, dass der flanschähnliche zweite Dichtungsabschnitt in radialer Richtung radial über die Flanschdichtfläche des Verbindungsflansches übersteht.

Ferner ist vorzugsweise vorgesehen, dass der flanschähnliche zweite Dichtungsabschnitt in radialer Richtung über eine Axialdruckfläche des ringförmigen Druckkörpers übersteht.

Mit diesen Merkmalen ist sichergestellt, dass die Axialdruckfläche des ringförmigen Druckkörpers stets auf den flanschähnlichen zweiten Dichtungsabschnitt wirkt, der dann seinerseits wiederum auf die Flanschdruckfläche des Verbindungsflansches einwirkt.

Eine weitere vorteilhafte Ausführungsform der Erfindung sieht vor, dass der flanschähnliche zweite Dichtungsabschnitt mit einer ringförmigen Versteifungseinlage versehen ist, die diesen hinsichtlich seiner Form stabilisiert.

Insbesondere ist dabei die ringförmige Versteifungseinlage in dem radial außerhalb des hülsenförmigen ersten Dichtungsabschnitts liegenden flanschartigen zweiten Dichtungsabschnitt angeordnet.

Hinsichtlich der Ausbildung des ringförmigen Druckkörpers wurden bislang keine näheren Angaben gemacht.

So sieht eine vorteilhafte Lösung vor, dass der ringförmige Druckkörper eine sich mit zunehmendem Abstand von seiner Axialdruckfläche radial verringernde Radialdruckfläche zum Verpressen des hülsenförmigen ersten Dichtungsabschnitts in Richtung auf das Spitzende aufweist.

Besonders vorteilhaft ist es, wenn der ringförmige Druckkörper auf seiner der Axialdruckfläche abgewandten Seite der Radialdruckfläche eine radial innerhalb der Radialdruckfläche liegenden Schubfläche zur Beaufschlagung des hülsenförmigen ersten Dichtungsabschnitts in Richtung des Verbindungsflansches aufweist.

Damit ist die Möglichkeit geschaffen, über diese Schubfläche den ersten Dichtungsabschnitt zumindest hinsichtlich seiner axialen Lage gegen ein Bewegen weg von dem Verbindungsflansch zu sichern oder noch zusätzlich auch den ersten Dichtungsabschnitt in Richtung des Verbindungsflansches zu beaufschlagen.

Ferner ist vorzugsweise vorgesehen, dass der ringförmige Druckkörper im Anschluss an die Schubfläche eine sich mit zunehmendem Abstand von der Schubfläche in Richtung des Spitzendes verjüngende weitere Radialdruckfläche aufweist.

Dadurch ist eine weitere verbesserte radiale Beaufschlagung des ersten Dichtungsabschnitts sichergestellt.

Ferner ist vorzugsweise vorgesehen, dass der hülsenförmige erste Dichtungsabschnitt eine umlaufende Schubstruktur zur Aufnahme der Schubfläche des ringförmigen Druckkörpers aufweist.

Die vorstehende Beschreibung erfindungsgemäßer Lösungen umfasst somit insbesondere die durch die nachfolgenden durchnummerierten Ausführungsformen definierten verschiedenen Merkmalskombinationen:
1. Rohrverbindungssystem (10) zum Verbinden eines Bauteils (12) mit einem Spitzende (14) mit einem einen Verbindungsflansch (24) aufweisenden Bauteil (22), umfassend ein Dichtungselement (30), und einem ringförmigen, auf das Dichtungselement (30) einwirkenden Druckkörper (100), dadurch gekennzeichnet, dass das Dichtungselement (30) einen das Spitzende (14) aufnehmenden und umfangseitig umschließenden hülsenförmigen ersten Dichtungsabschnitt (32) und einen mit dem hülsenförmigen ersten Dichtungsabschnitt (32) verbundenen und sich ausgehend von dem hülsenförmigen ersten Dichtabschnitt (32) radial über diesen hinaus erstreckenden flanschähnlichen zweiten Dichtungsabschnitt (72) zur Anlage an einer Flanschdichtfläche (124) des Verbindungsflansches (24) aufweist und dass der ringförmiger Druckkörper (100) mit dem Verbindungsflansch (24) mit Verspanneinheiten (130) verbindbar und dadurch in Richtung des Verbindungsflansches (24) beaufschlagbar ist, um aufgrund der Beaufschlagung in Richtung des Verbindungsflansches (24) einerseits den hülsenförmigen ersten Dichtungsabschnitt (32) radial in Richtung des Spitzendes (14) zu verpressen und andererseits den flanschartigen zweiten Dichtungsabschnitt (72) axial in Richtung der Flanschdichtfläche (124) des Verbindungsflansches (24) zu beaufschlagen.
2. Rohrverbindungssystem nach Ausführungsform 1, dadurch gekennzeichnet, dass der hülsenförmige erste Dichtungsabschnitt (32) auf seiner dem Spitzende (14) zugewandten Seite eine Dichtstruktur (40) mit mindestens einen geschlossen umlaufenden in Richtung einer Umfangsfläche (92) des Spitzendes (14) im Querschnitt vorgewölbte Dichtwulst (38) aufweist.
3. Rohrverbindungssystem nach einer der voranstehenden Ausführungsformen, dadurch gekennzeichnet, dass die Dichtstruktur (40) des hülsenförmigen ersten Dichtungsabschnitts (32) mehrere in axialer Richtung des Spitzendes (14) aufeinanderfolgend angeordnete und in Richtung der Umfangsfläche (92) des Spitzendes (14) vorgewölbte Dichtwulste (38) aufweist.
4. Rohrverbindungssystem nach einer der voranstehenden Ausführungsformen, dadurch gekennzeichnet, dass der hülsenförmige erste Dichtungsabschnitt (32) auf seiner dem ringförmigen Druckkörper (100) zugewandten Seite eine Druckstruktur mit mindestens einem geschlossen umlaufenden und in Richtung des ringförmigen Druckkörpers (100) im Querschnitt vorgewölbten Wulst (48) aufweist.
5. Rohrverbindungssystem nach Ausführungsform 4, dadurch gekennzeichnet, dass die Drukstruktur (40) des hülsenförmigen ersten Dichtungsabschnitts (32) mehrere in axialer Richtung des Spitzendes (14) aufeinanderfolgend angeordnete und in Richtung des ringförmigen Druckkörpers vorgewölbte Wulste aufweist.
6. Rohrverbindungssystem nach einer der voranstehenden Ausführungsformen, dadurch gekennzeichnet, dass der flanschartige zweite Dichtungsabschnitt (72) sich radial nach außen über den hülsenartigen ersten Dichtungsabschnitt (32) hinaus erstreckt.
7. Rohrverbindungssystem (10) nach Ausführungsform 6, dadurch gekennzeichnet, dass der flanschartige zweite Dichtungsabschnitt (72) ausgehend von dem ersten Dichtungsabschnitt (32) eine radiale Erstreckung (RF) aufweist, die größer ist als das 0,7 der radialen Erstreckung (RH) des ersten Dichtungsabschnitts (32), insbesondere größer ist als die radiale Erstreckung (RH) des ersten Dichtungsabschnitts.
8. Rohrverbindungssystem nach einer der voranstehenden Ausführungsformen, dadurch gekennzeichnet, dass sich der flanschähnliche zweite Dichtungsabschnitt (72) in radialer Richtung radial über die Flanschdichtfläche (124) des Verbindungsflansches (24) übersteht.
9. Rohrverbindungssystem nach einer der voranstehenden Ausführungsformen, dadurch gekennzeichnet, dass der flanschähnliche zweite Dichtungsabschnitt (72) in radialer Richtung radial über die Axialdruckfläche (112) des ringförmigen Druckkörpers (100) übersteht.
10. Rohrverbindungssystem nach einer der voranstehenden Ausführungsformen, dadurch gekennzeichnet, dass der flanschähnliche zweite Dichtungsabschnitt (72) mit einer ringförmigen Versteifungseinlage (84) versehen ist.
11. Rohrverbindungssystem nach Ausführungsform 10, dadurch gekennzeichnet, dass die ringförmige Versteifungseinlage (84) in dem radial außerhalb des hülsenförmigen ersten Dichtungsabschnitts (32) liegenden flanschartigen zweiten Dichtungsabschnitt (72) angeordnet ist.
12. Rohrverbindungssystem nach einer der voranstehenden Ausführungsformen, dadurch gekennzeichnet, dass der ringförmige Druckkörper (100) eine sich mit zunehmendem Abstand von seiner Axialdruckfläche (112) radial verringernde Radialdruckfläche (114) zum Verpressen des hülsenförmigen ersten Dichtungsabschnitts in Richtung auf das Spitzende (14) aufweist.
13. Rohrverbindungssystem nach Ausführungsform 12, dadurch gekennzeichnet, dass der ringförmige Druckkörper (100) auf einer der Axialdruckfläche (112) abgewandten Seite der Radialdruckfläche (114) eine radial innerhalb der Radialdruckfläche (114) liegende Schubfläche (116) zur Beaufschlagung des hülsenförmigen ersten Dichtungsabschnitts (32) in Richtung des Verbindungsflansches (24) aufweist.
14. Rohrverbindungssystem nach Ausführungsform 13, dadurch gekennzeichnet, dass der Druckkörper (100) im Anschluss an die Schubfläche (116) eine sich mit zunehmendem Abstand von der Schubfläche (116) in Richtung des Spitzendes (14) verjüngende weitere Radialdruckfläche (118) aufweist.
15. Rohrverbindungssystem nach Ausführungsform 14, dadurch gekennzeichnet, dass der hülsenförmige erste Dichtungsabschnitt (32) eine Schubstruktur (60) zur Aufnahme der Schubfläche (116) ringförmigen des Druckkörpers (100) aufweist.

Weitere Merkmale und Vorteile der Erfindung sind Gegenstand der nachfolgenden Beschreibung sowie der zeichnerischen Darstellung einiger Ausführungsbeispiele.

In der Zeichnung zeigen:
- Fig. 1: einen Längsschnitt durch ein erfindungsgemäßes Rohrverbindungssystem;
- Fig. 2: eine perspektivische Darstellung eines Dichtungselements des erfindungsgemäßen Rohrverbindungssystems;
- Fig. 3: einen halbseitigen Querschnitt durch das Dichtungselement des erfindungsgemäßen Rohrverbindungssystems und
- Fig. 4: eine vergrößerte Darstellung des Bereichs A in Fig. 1.

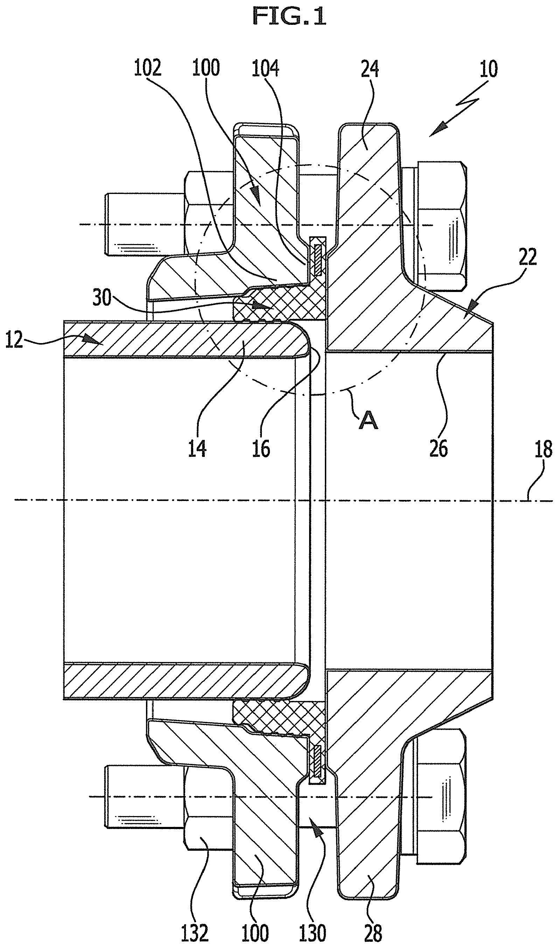

Ein in Fig. 1 dargestelltes Ausführungsbeispiel eines erfindungsgemäßen Rohrverbindungssystems 10 verbindet ein Bauteil 12 mit einem Spitzende 14, im einfachsten Fall ein Rohr 12 mit seinem Spitzende 14, wobei sich das Spitzende 14 bis zu einer endseitigen Stirnfläche 16 erstreckt und koaxial zu einer Mittelachse 18 des Rohrverbindungssystems 10 angeordnet ist, mit einem Bauteil 22, welches einen Verbindungsflansch 24 aufweist, wobei das Bauteil 22 beispielsweise als Armatur ausgebildet ist und wobei der Verbindungsflansch 24 einen zentralen und mit dem Spitzende 14 fluchtenden Durchlass 26 aufweist, der ebenfalls koaxial zur Mittelachse 18 des Rohrverbindungssystems 10 angeordnet ist.

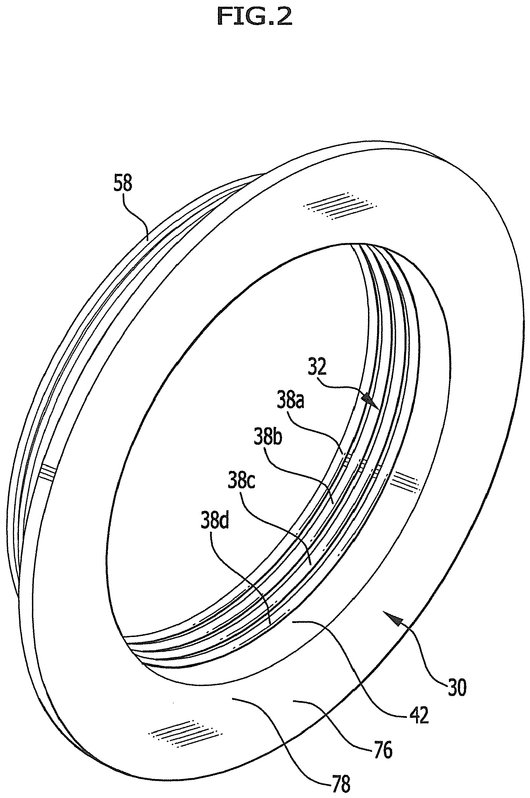

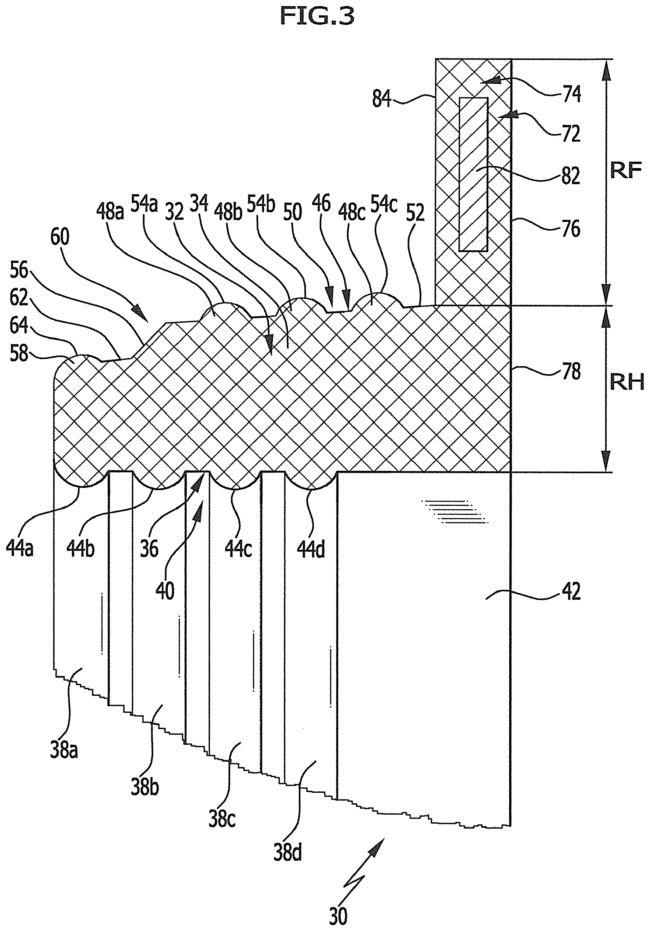

Zur Abdichtung zwischen dem Spitzende 14 und dem Verbindungsflansch 24 ist ein als Ganzes mit 30 bezeichnetes Dichtungselement vorgesehen, welches, wie in Fig. 2 und 3 dargestellt, einen hülsenförmigen ersten Dichtungsabschnitt 32 umfasst, der einen hülsenförmigen Grundkörper 34 aufweist, welcher eine innere Abdichtseite 36 aufweist, welche auf das Spitzende 14, beispielsweise von Seiten der endseitigen Stirnfläche 16, aufschiebbar ist und welche in axialer Richtung aufeinanderfolgend angeordnete radial um die Mittelachse 18 des Rohrverbindungssystems umlaufende Dichtwulste 38a, 38b, 38c und 38d aufweist, die in sich geschlossen um die Mittelachse 18 umlaufen und sich ausgehend von einer Grundfläche 42 der Abdichtseite 36 jeweils als beispielsweise im Querschnitt halbrunde oder gegebenenfalls auch rechteckförmige oder auch trapezförmige oder auch dreieckförmige Vorwölbungen erheben und dabei Wulstkämme 44a, 44b, 44c und 44d bilden, die beim Aufschieben des hülsenförmigen Dichtabschnitts 32 auf das Spitzende 14 zu einer erhöhten lokalen Flächenpressung führen.

Die innere Abdichtseite 36 mit den sich über der Grundfläche 42 erhebenden Dichtwulst 38 bildet somit eine radial innenliegende Dichtstruktur 40.

Der hülsenförmige erste Dichtungsabschnitt 32 weist ferner der radial innenliegenden Abdichtseite 36 radial außen gegenüberliegend eine Druckseite 46 auf, die ebenfalls mit Wulsten 48a, 48b und 48c versehen ist, die sich ausgehend von einer Grundfläche 52 der Druckseite 46 erheben und ebenfalls geschlossen umlaufen, wobei die Wulste 48a, 48b und 48c im Querschnitt halbrund, rechteckig, trapezförmig oder auch dreieckförmig ausgebildet sein können, die alle ihrerseits Wulstkämme 54a, 54b und 54c bilden.

Die Druckseite 46 mit den sich über die Grundfläche 52 erhebenden Wulsten 48 bildet somit eine Druckstruktur 50 zum radial in Richtung der Mittelachse wirkenden Beaufschlagen der Dichtstruktur 40 in Richtung des Spitzendes 14.

Ferner umfasst der hülsenförmige Dichtungsabschnitt 32 eine gegenüber der Grundfläche 52 radial zurückgesetzte Schubschräge 56 und in Fortsetzung der Schubschräge 56 auf einer der Grundfläche 52 gegenüberliegenden Seite einen Endwulst 58, welcher sich über eine relativ zu der Grundfläche 52 radial zurückgesetzte Umfangsfläche 62 erhebt und ebenfalls im Querschnitt halbrund, rechteckig, trapezförmig oder auch dreieckförmig ausgebildet sein kann und somit einen Wulstkamm 64 bildet.

Die Schubschräge 56 mit der relativ zur Grundfläche 52 der Druckstruktur 50 zurückgesetzten Umfangsfläche 62 und dem Endwulst 58 bildet somit eine Schubstruktur 60, mit welcher - wie nachfolgend im Detail erläutert - eine Beaufschlagung des Dichtungselements 30 in Richtung des Verbindungsflansches 24 erfolgt.

An den hülsenförmigen Dichtungsabschnitt 32 des Dichtungselements 30 ist außerdem ein flanschartiger zweiter Dichtungsabschnitt 72 einstückig angeformt, der sich mit einem Flanschkörper 74 ausgehend von dem hülsenförmigen ersten Dichtungsabschnitt 32 in radialer Richtung zur Mittelachse 18 nach außen erstreckt und sich beispielsweise ausgehend von der Grundfläche 52 der Druckstruktur 50 erhebt, wobei der Flanschkörper 74 ausgehend von der Grundfläche 52 eine radiale Erstreckung RF aufweist, die größer ist als ein 0,7-faches einer radialen Erstreckung RH des Grundkörpers 34 gemessen zwischen der Grundfläche 42 und der Grundfläche 52 derselben, noch besser größer ist als die radiale Erstreckung RH des Grundkörpers 34.

Ferner bildet der Flanschkörper 74 eine in einer senkrecht zur Mittelachse 18 verlaufenden Ebene liegende äußere Axialdichtfläche 76, die gegebenenfalls ergänzt wird durch eine in derselben Ebene liegende innere Axialdichtfläche 78, gebildet durch den Grundkörper 34 des hülsenförmigen ersten Dichtungsabschnitts 32.

Dabei liegt die innere Axialdichtfläche 78 auf einer der Schubstruktur 60 gegenüberliegenden Seite des hülsenförmigen Dichtungsabschnitts 32.

Ferner ist, wie in Fig. 3 dargestellt, der flanschähnliche Dichtungsabschnitt 72 noch mit einem Verstärkungsring 82 versehen, welcher in den Flanschkörper 74 eingebettet und allseitig von einem elastischen Dichtmaterial umschlossen ist, wobei der Versteifungsring 82 aus einem in sich steifen Material, beispielsweise einem Metall oder einem in sich steifen Kunststoff gebildet ist, und dazu beiträgt, dass auch bei Druckbeaufschlagung der Flanschkörper 74 formstabil bleibt.

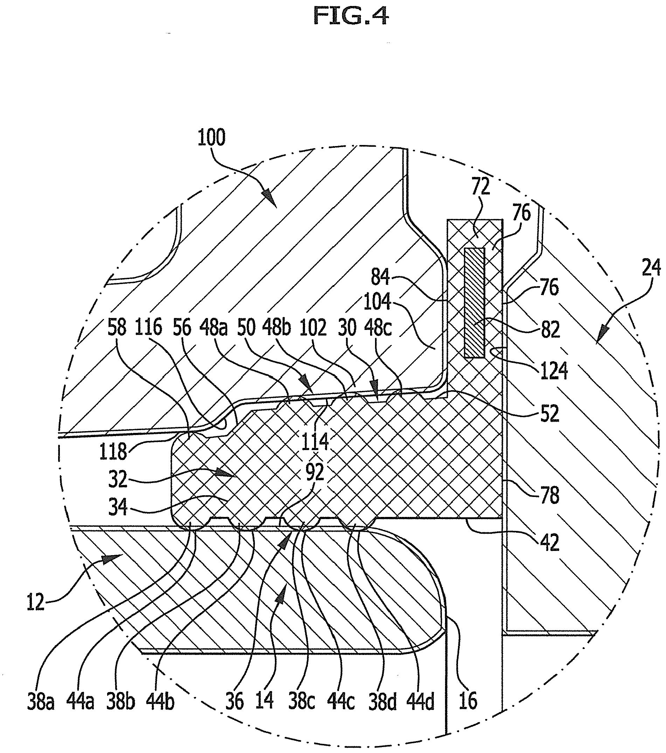

Beim Einsatz eines derartigen Dichtelements 30 in dem erfindungsgemäßen Rohrverbindungssystem 10 wird, wie in Fig. 4 dargestellt, das Dichtelement 30 mit dem hülsenförmigen ersten Dichtungsabschnitt 32 ausgehend von der endseitigen Stirnfläche 16 auf das Spitzende 14 des Bauteils 12 aufgeschoben, so dass die Dichtstruktur 40 mit der inneren Abdichtseite 36 des hülsenförmigen Dichtungsabschnitts 32 auf einer Umfangsfläche 92 des Spitzendes 14 aufliegt, wobei insbesondere die Dichtwulste 38a, 38b, 38c und 38d mit ihren Wulstkämmen 44a, 44b, 44c, und 44d auf der Umfangsfläche 92 aufliegen, um somit an der Stelle ihres Aufliegens eine möglichst hohe Flächenpressung zur Abdichtung zwischen dem hülsenförmigen Dichtungsabschnitt 32 und der Umfangsfläche 92 des Spitzendes 14 zu erreichen. Dabei wird die Dichtpressung im Bereich der Wulstkämme 44a bis 44d noch verstärkt durch die Einwirkung eines ringförmigen Druckkörpers 100, welcher einerseits eine auf den ersten hülsenförmigen Dichtabschnitt sowohl radial als auch axial relativ zur Mittelachse 18 auf die Druckstruktur 50 und die Schubstruktur 60 einwirkenden Druckhülsenabschnitt 102 und andererseits einen axial auf den zweiten flanschähnlichen Dichtungsabschnitt 72 einwirkenden Druckflanschabschnitt 104 aufweist.

Der Druckflanschabschnitt 104 umfasst eine sich in radialer Richtung zur Mittelachse 18 erstreckende Axialdruckfläche 112, mit welcher der Druckflanschabschnitt 104 des Druckkörpers 100 auf den Flanschkörper 74 einwirkt und zwar auf eine der äußeren Abdichtfläche 76 des Dichtungsabschnitts 72 gegenüberliegende Anlagefläche 84 des zweiten flanschähnlichen Dichtungsabschnitts 72, wobei die Anlagefläche 84 sich vorzugsweise ausgehend von der Grundfläche 52 radial nach außen erstreckt.

Ferner umfasst der Druckkörper 100 eine sich mit zunehmendem Abstand von der Axialdruckfläche 112 ihren radialen Abstand von der Mittelachse 18 verringernde Radialdruckfläche 114, welche auf die Druckstruktur 50 des hülsenförmigen ersten Dichtungsabschnitts 32, insbesondere im Bereich der Wulste 48a, 48b und 48c einwirkt, so dass die Radialdruckfläche 114 auf den Wulstkämmen 54 aufsitzt und somit die Druckstruktur 50 lokal beaufschlagt.

Dabei erleichtert die durch die Wulste 48 flächenmäßig reduzierte Auflagefläche der Radialdruckfläche 114 das Aufgleiten der Radialdruckfläche 114 auf der Druckstruktur 50 da die Wulste 48 sich in radialer Richtung leichter verformen lassen als ein vollflächig an der Radialdruckfläche 114 anliegender Körper.

Ferner umfasst der Druckhülsenabschnitt 102 noch eine radial gegenüber der Radialdruckfläche 114 nach innen verlaufende Schubfläche 116, welche gegebenenfalls an der Schubstruktur 60 des hülsenförmigen ersten Dichtungsabschnitts 32 zur Anlage kommen kann, um diesen hülsenförmigen ersten Dichtungsabschnitt 32 in Richtung des Verbindungsflansches 24 zu beaufschlagen.

Im Anschluss an die Schubfläche 116 verläuft eine weitere Radialdruckfläche 118 gegenüber der Radialdruckfläche 114 ebenfalls mit zunehmender Erstreckung weg von der Schubfläche 116 mit zunehmend geringer werdendem radialem Abstand von der Mittelachse 18 und wirkt auf den Endwulst 58, um auch diesen in Richtung der Mittelachse 18 und somit auch in Richtung der Umfangsfläche 92 des Spitzendes 14 zu beaufschlagen, wobei auch in diesem Fall die Ausbildung des Endwulstes 58 das Aufschieben des Druckhülsenabschnitts 102 mit der Radialdruckfläche 118 auf diesen erleichtert.

Durch die Beaufschlagung des Dichtungselements 30 mittels des Druckkörpers 100 erfolgt somit ein Abdichten zwischen dem Dichtungselement 30 und dem Spitzende 14 durch die auf der Umfangsfläche 92 des Spitzendes 14 aufliegenden und partiell deformierten Dichtwulste 38 und außerdem ein Abdichten zumindest zwischen dem flanschähnlichen Dichtungsabschnitt 72 mit seiner äußeren Axialdichtfläche 76 und gegebenenfalls noch durch das Anliegen der inneren Axialdichtfläche 78 des hülsenförmigen ersten Dichtungsabschnitts 32 an einer Flanschdichtfläche 124 des Verbindungsflansches 24, die sich in einer senkrecht zur Mittelachse 18 verlaufenden Ebene erstreckt, jedoch bezogen auf die Mittelachse 18 sich bis zu einem maximalen Radius erstreckt, der maximal dem maximalen Radius des zweiten Dichtungsabschnitts 72 entspricht, vorzugsweise kleiner ist als der maximale Radius des zweiten Dichtungsabschnitts 72.

In gleicher Weise ist auch der maximale Radius der Axialdruckfläche 112 des Druckkörpers 100 maximal so groß wie der maximale Radius des Dichtungsabschnitts 72, vorzugsweise geringer als dieser, so dass der flanschähnliche Dichtungsabschnitt 72 radial über die Axialdruckfläche 112 und die Flanschdruckfläche 124 übersteht und wird somit erreicht, dass auch bei einer unpräzisen Montage der Rohrverbindung stets der flanschähnliche Dichtungsabschnitt zwischen der Axialdruckfläche 112 des Druckkörpers 100 und der Flanschdichtfläche 124 des Verbindungsflansches 24 liegt und diese nicht direkt aufeinander anliegen können.

Zum Verspannen des Druckkörpers 100 relativ zum Verbindungsflansch 24 sind, wie in Fig. 1 dargestellt, Verspanneinheiten 130 vorgesehen, die beispielsweise durch den Verbindungsflansch 24 und den Druckkörper 100 radial außerhalb der Flanschdruckfläche 124 und der Axialdruckfläche 112 liegende Schraubverbindungen 132 gebildet sind.

## Patentansprüche

1. Rohrverbindungssystem (10) zum Verbinden eines Bauteils (12) mit einem Spitzende (14) mit einem einen Verbindungsflansch (24) aufweisenden Bauteil (22), umfassend ein Dichtungselement (30), und einem ringförmigen, auf das Dichtungselement (30) einwirkenden Druckkörper (100),
**dadurch gekennzeichnet , dass** das Dichtungselement (30) einen das Spitzende (14) aufnehmenden und umfangseitig umschließenden hülsenförmigen ersten Dichtungsabschnitt (32) und einen mit dem hülsenförmigen ersten Dichtungsabschnitt (32) verbundenen und sich ausgehend von dem hülsenförmigen ersten Dichtabschnitt (32) radial über diesen hinaus erstreckenden flanschähnlichen zweiten Dichtungsabschnitt (72) zur Anlage an einer Flanschdichtfläche (124) des Verbindungsflansches (24) aufweist und dass der ringförmiger Druckkörper (100) mit dem Verbindungsflansch (24) mit Verspanneinheiten (130) verbindbar und dadurch in Richtung des Verbindungsflansches (24) beaufschlagbar ist, um aufgrund der Beaufschlagung in Richtung des Verbindungsflansches (24) einerseits den hülsenförmigen ersten Dichtungsabschnitt (32) radial in Richtung des Spitzendes (14) zu verpressen und andererseits den flanschartigen zweiten Dichtungsabschnitt (72) axial in Richtung der Flanschdichtfläche (124) des Verbindungsflansches (24) zu beaufschlagen.

2. Rohrverbindungssystem nach Anspruch 1, **dadurch gekennzeichnet, dass** der hülsenförmige erste Dichtungsabschnitt (32) auf seiner dem Spitzende (14) zugewandten Seite eine Dichtstruktur (40) mit mindestens einen geschlossen umlaufenden in Richtung einer Umfangsfläche (92) des Spitzendes (14) im Querschnitt vorgewölbte Dichtwulst (38) aufweist.

3. Rohrverbindungssystem nach einem der voranstehenden Ansprüche, **dadurch gekennzeichnet, dass** die Dichtstruktur (40) des hülsenförmigen ersten Dichtungsabschnitts (32) mehrere in axialer Richtung des Spitzendes (14) aufeinanderfolgend angeordnete und in Richtung der Umfangsfläche (92) des Spitzendes (14) vorgewölbte Dichtwulste (38) aufweist.

4. Rohrverbindungssystem nach einem der voranstehenden Ansprüche, **dadurch gekennzeichnet, dass** der hülsenförmige erste Dichtungsabschnitt (32) auf seiner dem ringförmigen Druckkörper (100) zugewandten Seite eine Druckstruktur mit mindestens einem geschlossen umlaufenden und in Richtung des ringförmigen Druckkörpers (100) im Querschnitt vorgewölbten Wulst (48) aufweist.

5. Rohrverbindungssystem nach Anspruch 4, **dadurch gekennzeichnet, dass** die Drukstruktur (40) des hülsenförmigen ersten Dichtungsabschnitts (32) mehrere in axialer Richtung des Spitzendes (14) aufeinanderfolgend angeordnete und in Richtung des ringförmigen Druckkörpers vorgewölbte Wulste aufweist.

6. Rohrverbindungssystem nach einem der voranstehenden Ansprüche, **dadurch gekennzeichnet, dass** der flanschartige zweite Dichtungsabschnitt (72) sich radial nach außen über den hülsenartigen ersten Dichtungsabschnitt (32) hinaus erstreckt.

7. Rohrverbindungssystem (10) nach Anspruch 6, **dadurch gekennzeichnet, dass** der flanschartige zweite Dichtungsabschnitt (72) ausgehend von dem ersten Dichtungsabschnitt (32) eine radiale Erstreckung (RF) aufweist, die größer ist als das 0,7 der radialen Erstreckung (RH) des ersten Dichtungsabschnitts (32), insbesondere größer ist als die radiale Erstreckung (RH) des ersten Dichtungsabschnitts.

8. Rohrverbindungssystem nach einem der voranstehenden Ansprüche, **dadurch gekennzeichnet, dass** sich der flanschähnliche zweite Dichtungsabschnitt (72) in radialer Richtung radial über die Flanschdichtfläche (124) des Verbindungsflansches (24) übersteht.

9. Rohrverbindungssystem nach einem der voranstehenden Ansprüche, **dadurch gekennzeichnet, dass** der flanschähnliche zweite Dichtungsabschnitt (72) in radialer Richtung radial über die Axialdruckfläche (112) des ringförmigen Druckkörpers (100) übersteht.

10. Rohrverbindungssystem nach einem der voranstehenden Ansprüche, **dadurch gekennzeichnet, dass** der flanschähnliche zweite Dichtungsabschnitt (72) mit einer ringförmigen Versteifungseinlage (84) versehen ist.

11. Rohrverbindungssystem nach Anspruch 10, **dadurch gekennzeichnet, dass** die ringförmige Versteifungseinlage (84) in dem radial außerhalb des hülsenförmigen ersten Dichtungsabschnitts (32) liegenden flanschartigen zweiten Dichtungsabschnitt (72) angeordnet ist.

12. Rohrverbindungssystem nach einem der voranstehenden Ansprüche, **dadurch gekennzeichnet, dass** der ringförmige Druckkörper (100) eine sich mit zunehmendem Abstand von seiner Axialdruckfläche (112) radial verringernde Radialdruckfläche (114) zum Verpressen des hülsenförmigen ersten Dichtungsabschnitts in Richtung auf das Spitzende (14) aufweist.

13. Rohrverbindungssystem nach Anspruch 12, **dadurch gekennzeichnet, dass** der ringförmige Druckkörper (100) auf einer der Axialdruckfläche (112) abgewandten Seite der Radialdruckfläche (114) eine radial innerhalb der Radialdruckfläche (114) liegende Schubfläche (116) zur Beaufschlagung des hülsenförmigen ersten Dichtungsabschnitts (32) in Richtung des Verbindungsflansches (24) aufweist.

14. Rohrverbindungssystem nach Anspruch 13, **dadurch gekennzeichnet, dass** der Druckkörper (100) im Anschluss an die Schubfläche (116) eine sich mit zunehmendem Abstand von der Schubfläche (116) in Richtung des Spitzendes (14) verjüngende weitere Radialdruckfläche (118) aufweist.

15. Rohrverbindungssystem nach Anspruch 14, **dadurch gekennzeichnet, dass** der hülsenförmige erste Dichtungsabschnitt (32) eine Schubstruktur (60) zur Aufnahme der Schubfläche (116) ringförmigen des Druckkörpers (100) aufweist.
